# EUROPÄISCHE PATENTSCHRIFT

(11) **EP 4 177 192 B1**
(45) Veröffentlichungstag und Bekanntmachung des Hinweises auf die Patenterteilung: **12.11.2025**
(21) Anmeldenummer: 22179066.0
(22) Anmeldetag: 14.06.2022
(51) Int. Cl.: B65G 47/82, B65G 47/86

(54) **ROTATIONSPUSHER**
ROTATION PUSHER
POUSSOIR ROTATIF

(30) Priorität: 17.08.2021 DE 202021104385 U
(43) Veröffentlichungstag der Anmeldung: 10.05.2023
(73) Patentinhaber: Krones AG, 93073 Neutraubling (DE)
(72) Erfinder: Hoellriegl, Thomas, 93073 Neutraubling (DE); Senn, Konrad, 93073 Neutraubling (DE); Finger, Dieter, 93073 Neutraubling (DE)
(74) Vertreter: Hannke Bittner & Partner mbB Regensburg

(56) Entgegenhaltungen:
- WO-A1-2020/115421
- US-A- 4 793 461

## Beschreibung

Die vorliegende Erfindung bezieht sich auf eine Vorrichtung zum Behandeln von Behältnissen, insbesondere auf das Transportieren und Ausleiten von Behältnissen.

Im Stand der Technik ist es nicht unüblich, eine Abfüllanlange direkt mit einer Blasformmaschine zu koppeln. Da aber in einigen Fällen die Blasformmaschine einen deutlich höheren Ausstoß an fertigen Flaschen liefert als ihn die Abfüllmaschine verarbeiten kann, kann es nötig sein die Ausstoßleistung der Blasformmaschine zu drosseln. Eine solche Regulation der kompletten Blasformanlage ist technisch sehr aufwendig.

Eine Methode zur Reduktion der produzierten Flaschen hierfür wäre das Ausschleusen von beispielsweise jedem zweiten oder jedem dritten Kunststoffvorformling nach dem Ofen in der Blasmaschine für eine Ofenlänge, wobei üblicherweise mehr als 100 Behälter pro Stunde ausgeschleust werden

Um solch ein hochfrequentiertes Ausschleusen der Kunststoffvorformlinge zu ermöglichen, werden speziell darauf ausgelegte Ausleiteinrichtungen benötigt. Die im Stand der Technik bekannten Vorrichtungen, beispielsweise mechanischer Natur (Stößel) sind vermutlich nicht mehr dazu in der Lage, so schnell und auch dauerhaft zu schalten. Vorrichtungen zum pneumatischen Ausschleusen wären zwar schnell genug, bringen aber nicht genug Kraft auf, um ein Ausschleusen zu ermöglichen. Eine Vorrichtung, die den Oberbegriff des Anspruchs 1 offenbart, ist in der WO 2020/115421 A1 gezeigt.

Daher stellt sich für die vorliegende Erfindung die Aufgabe, eine Vorrichtung zum Behandeln von Behältnissen, insbesondere eine Ausleitvorrichtung bereitzustellen, welche die oben genannten Kriterien erfüllt. Die Aufgabe wird mit einer Vorrichtung gemäß Anspruch 1 gelöst. Die Idee ist, dass an einem rotativen Antrieb eine Ausleiteinrichtung eindreht und ausdreht je nachdem, ob ein Behältnis ausgeleitet werden soll.

Bei einer erfindungsmäßen Vorrichtung zum Behandeln von Behältnissen mit einer Transporteinrichtung werden die Behältnisse entlang eines vorgegebenen Transportpfades transportiert, wobei die Transporteinrichtung einen bewegbaren Träger aufweist, an dem eine Vielzahl von Halteeinrichtungen zum Halten der Behältnisse angeordnet ist. Die transportierten Behältnisse weisen jeweils Längsrichtungen auf, wobei die Längsrichtungen der von der Transporteinrichtung transportierten Behältnisse parallel zueinander ausgerichtet sind und bevorzugt die Behältnisse äquidistant voneinander beabstandet sind.

Die erfindungsgemäße Vorrichtung weist eine Ausleitvorrichtung auf, welche dazu geeignet und bestimmt ist, einzelne Behältnisse aus dem Transportpfad auszuleiten, wobei die Ausleitvorrichtung eine Ausleiteinrichtung aufweist, welche wenigstens einen Kontaktbereich aufweist, welcher die Behältnisse kontaktiert, um diese aus dem Transportpfad auszuleiten. Erfindungsgemäß ist die Ausleiteinrichtung bezüglich einer vorgegebenen Schwenkachse schwenkbar, wobei diese Schwenkachse im Wesentlichen parallel zu den Längsrichtungen der Behältnisse angeordnet ist.

Bevorzugt handelt es sich bei den transportierten Behältnissen um Kunststoffvorformlinge zur Herstellung von Kunststoffflaschen, insbesondere PET-Flaschen, welche eine Mantelfläche, eine Mündungsöffnung, ein Gewinde und bevorzugt einen Tragring aufweisen, wobei die vorliegende Erfindung nicht auf Kunststoffvorformlinge beschränkt ist und auch für bereits blasgeformte Flaschen oder andere Behältnisse anwendbar ist. Die Transporteinrichtung umfasst einen bewegbaren Träger, welcher eine Vielzahl an Halteeinrichtungen aufweist. In diesen Halteeinrichtungen werden bevorzugt die Behältnisse aufrecht angeordnet mit ihrer Mündung nach oben weisend, insbesondere durch zwei Klammern seitlich eingeklemmt, wobei die beiden Klammern bevorzugt über eine gemeinsame Schwenkachse verbunden sind. Die einzelnen Halteeinrichtungen und damit auch die davon gehaltenen Behältnisse sind voneinander bevorzugt äquidistant beabstandet, wobei die Längsrichtungen (L) der Behältnisse zueinander parallel ausgerichtet sind und bevorzugt senkrecht zur Transportrichtung stehen.

Die Transporteinrichtung weist bevorzugt einen kreisförmigen, rotationssymmetrischen oder kreissegmentförmigen Transportpfad auf, wobei lineare Transportsysteme nicht auszuschließen sind. Die transportierten Behältnisse und die Schwenkachsen der Haltevorrichtungen rotieren bevorzugt um einen gemeinsamen geometrischen Mittelpunkt auf konzentrischen Kreisen, wobei die Schwenkachsen auf einer dem Mittelpunkt näheren Kreisbahn angeordnet sind. Die Klammern der Halteeinrichtungen sind vorteilhaft derart konstruiert, dass ein Segment der Mantelflächen der Behältnisse im Bereich der Klammern auf der dem Mittelpunkt zugewandten Seite kontaktiert wird, wobei vorteilhaft der radial nach außen zeigende Bereich der Mantelflächen frei bleibt.

Eine erfindungsgemäße Ausleitvorrichtung umfasst eine rotativ gelagerte schwenkbare Ausleiteinrichtung, wobei die Schwenkachse im Wesentlichen parallel zur Längsrichtung der zu transportierenden Behältnisse angeordnet ist. Die Ausleiteinrichtung ist um die Schwenkachse schwenkbar, welche bevorzugt innerhalb des kreisförmigen Transportpfades der Behältnisse stationär gegenüber der Transporteinrichtung angeordnet ist.

Die Ausleiteinrichtung weist wenigstens einen Kontaktbereich auf, welcher nach dem Einschwenken der Ausleiteinrichtung in die Bewegungsbahn der Behältnisse diese berührt, wodurch das Behältnis aus der Klammer gelöst und nach außen aus dem Transportpfad ausgeleitet wird. Der Berührung erfolgt bevorzugt möglichst nahe unterhalb der Klammern um eine optimale Kraftübertragung ohne starkes Verkippen der Behältnisse zu erreichen. Die Berührung erfolgt nicht weiter als 15 mm, bevorzugt nicht weiter als 10 mm und besonders bevorzugt nicht weiter als 5 mm von der Unterseite der Klammern entfernt.

Bei einer vorteilhaften Ausführung der erfindungsgemäßen Vorrichtung weist diese eine Antriebseinrichtung zum Antreiben der Ausleiteinrichtung auf. Diese Antriebseinrichtung weist einen Rotationsmotor, bevorzugt einen Gleichstrommotor, Asynchronmotor oder Schrittmotor oder besonders bevorzugt einen Synchronmotor und bevorzugt einen Drehgeber auf. Die Antriebseinrichtung ist bevorzugt unter dem Teilungsverzugsstern der Blasformmaschine verbaut. Da die Antriebseinrichtung mit der Ausleiteinrichtung eine Gefahrenstelle sein kann, ist diese bevorzugt in eine Sicherheitsarchitektur eingebunden. Hierbei wäre eine sofortige Stillsetzung der Antriebs- und Ausleiteinrichtung beim Öffnen einer Schutzverkleidung oder bei Betätigung eines Not-Aus-Schalters denkbar.

Bei einer weiteren vorteilhaften Ausführung der erfindungsgemäßen Vorrichtung ist die Antriebseinrichtung der Ausleitvorrichtung mit einer variablen Geschwindigkeit betreibbar, welche insbesondere in Abhängigkeit von Steuersignalen steuerbar ist. Hierbei wäre es denkbar, dass eine vorgelagerte Inspektionseinheit fehlerhafte Behältnisse identifiziert und Signale zu einem anschließenden Ausleiten der entsprechenden Behältnisse erzeugt. Dabei ist es auch denkbar, dass die Ausleitvorrichtung auf solche Signale hin aktiviert wird. Denkbar wäre es weiterhin, dass die Ausleiteinrichtung auf ein solches Signal hin gestartet und von einer ruhenden Position aus beschleunigt wird oder auch die Geschwindigkeit der bereits rotierenden Ausleiteinrichtung verändert wird.

Bei einer weiteren vorteilhaften Ausführung der erfindungsgemäßen Vorrichtung weist die Ausleiteinrichtung wenigstens einen Flügel und/oder der Kontaktbereich wenigstens zwei unterschiedliche Geometrien auf. Die Ausleiteinrichtung kann als Körper verstanden werden, welcher fest mit der Schwenkachse verbunden ist und um/mit diese/dieser rotiert. Ein solcher Körper, umfassend wenigstens einen Flügel, könnte hierbei als rotationssymmetrischer Körper und/oder als sich nur in einer radialen Richtung erstreckender Körper ausgeführt sein. Unter unterschiedlichen Geometrien versteht man in diesem Zusammenhang die Oberflächenkonturen der Ausleiteinrichtung. Die Ausleiteinrichtung ist so geformt, dass die resultierende Kraft, die sich aus der relativen Bewegung des Behältnisses und der Ausleiteinrichtung zueinander ergibt, nahezu parallel zur Klammerachse verläuft. Hierbei wäre es denkbar, dass die Bewegungsbahn der Ausleiteinrichtung relativ zum Mittelpunkt des Behältnisses bei unterschiedlichem Durchmesser des Behältnisses unterschiedlich eingestellt ist. Die Ausleiteinrichtung kann eine unterschiedliche Anzahl an Flügeln haben, wodurch verschiedene Strategien zum Ausleiten der Behältnisse realisierbar sind.

Es stellen sich hohe Anforderungen an die erfindungsgemäße Ausleiteinrichtung bezüglich einer sehr schnellen Reaktionsfähigkeit, Beschleunigung der Ausleiteinrichtung, Schaltbarkeit, etc., welche von anderen derzeit im Stand der Technik bekannten Ausleitsystemen nicht erbracht werden können.

Um eine solch hohe Winkelbeschleunigung der Ausleiteinrichtung zu ermöglichen, soll das Trägheitsmoment der Ausleiteinrichtung bei einer vorteilhaften Ausführung der erfindungsgemäßen Vorrichtung kleiner als 5 kg/cm², bevorzugt kleiner als 3 kg/cm² und besonders bevorzugt kleiner als 2 kg/cm² sein.

Die hohen Anforderungen an die Dynamik der Antriebseinrichtung korreliert typischerweise mit einem reduzierten maximalen Drehmoment. Um das für das Ausleiten von Behältnissen aus dem Transportpfad, insbesondere wenn größere Behältnisse behandelt werden sollen, nötige Drehmoment zu erreichen, wäre es denkbar die Geometrie der Ausleiteinrichtung dahin gehend anzupassen.

In einer vorteilhaften Ausführung der erfindungsgemäßen Vorrichtung weist die Ausleiteinrichtung eine Geometrie auf, welche das Ausleiten der Behältnisse aktiv unterstützt. Dies könnte durch eine entsprechende Geometrie im Kontaktbereich der Ausleiteinrichtung erfolgen, bei der das auszuleitende Behältnis eine Kraft auf die Ausleiteinrichtung ausübt und sich gewissermaßen selbst aus der Halteeinrichtung, genauer gesagt aus den Klammern heraushebelt.

Um das Antriebsmoment und die Massenträgheit gering zu halten, ist bei einer vorteilhaften Ausführung der erfindungsgemäßen Vorrichtung der Durchmesser der Ausleiteinrichtung kleiner als 125 mm, besonders bevorzugt kleiner als 100 mm und/oder größer als 50 mm und besonders bevorzugt größer als 75 mm. In diesem Zusammenhang wird der Durchmesser verstanden als die Verbindunglinie der zwei am weitesten voneinander entfernten Punkte, wobei die hypothetische Verbindungslinie durch den Mittelpunkt der Ausleiteinrichtung und die Schwenkachse zu gehen hat.

Um die beschriebenen Anforderungen in Bezug auf die Massenträgheit der Ausleiteinrichtung zu erfüllen und trotzdem eine steife und verwindungsstabile Konstruktion zu erhalten, ist es denkbar "lightweight" Konstruktionsprinzipien oder 3D-Druck-Methoden anzuwenden. In einer vorteilhaften Ausführung der erfindungsgemäßen Vorrichtung weist die Ausleiteinrichtung Ausnehmungen und/oder Hohlräume auf. Die Ausleiteinrichtung ist bevorzugt aus Kunststoff oder einem Material geringer Dichte gefertigt, wobei die Dichte kleiner als 3 g/cm³, bevorzugt kleiner als 2 g/cm³ und besonders bevorzugt kleiner als 1 g/cm³ ist.

In einer vorteilhaften Ausführung der erfindungsgemäßen Vorrichtung weist die Ausleiteinrichtung genau einen Flügel auf und bevorzugt der Kontaktbereich eine erste Geometrie zum dynamischen Ausleiten von Behältnissen und eine zweite Geometrie zum statischen Ausleiten von Behältnissen.

In einer weiteren vorteilhaften Ausführung der erfindungsgemäßen Vorrichtung weist die Ausleiteinrichtung eine Parkposition auf, also eine Position, in der die Flügel verweilen können.

Hierbei wäre es denkbar, dass die Ausleiteinrichtung sich zu Beginn in einer ruhenden Parkposition befindet. In Reaktion auf ein Signal zum Ausleiten eines Behältnisses kann die Ausleiteinrichtung beschleunigt werden, um einen auf die Bewegung des Behältnisses synchronisierten Bewegungsablauf durchzuführen. Hierbei trifft die erste Geometrie des Kontaktbereichs auf das auszuleitende Behältnis und drückt dadurch dieses (dynamisch) aus der Klammer der Halteeinrichtung der Transporteinrichtung.

Soll das nachfolgende Behältnis nicht ausgeleitet werden, so kann die Ausleiteinrichtung ruckfrei in einer kontinuierlichen Bewegung seine Rotation fortsetzen und nach einer Volldrehung in die Parkposition zurückkehren. Sollte hingegen das nachfolgende Behältnis ebenfalls ausgeleitet werden, kann die Ausleiteinrichtung nach dem vorhergehenden dynamischen Ausleiten des Behältnisses stark verzögern, so dass die zweite Geometrie des Kontaktbereichs auf das auszuleitende Behältnis trifft und dieses (statisch) aus der Klammer der Halteeinrichtung der Transporteinrichtung drückt. Für den Fall, dass jedes zweite Behältnis ausgeleitet werden soll, wäre es denkbar, dass die Ausleiteinrichtung in einem zur Bewegung der Behältnisse synchronisiertem Bewegungsablauf rotiert und jedes zweite Behältnis mit der ersten Geometrie des Kontaktbereichs die Behältnisse dynamisch ausleitet. Hierbei würde die Parkposition einfach überfahren werden.

In einer weiteren vorteilhaften Ausführung der erfindungsgemäßen Vorrichtung weist die Ausleiteinrichtung wenigstens zwei, bevorzugt wenigstens drei und besonders bevorzugt wenigstens vier Flügel auf und/oder wird kontinuierlich bewegt. Die Ausleiteinrichtung würde hierbei mit einer auf die Bewegung der Behältnisse synchronisierten Geschwindigkeit rotieren. Für den Fall, dass kein Behältnis ausgeleitet werden soll, wäre die Bewegung der Ausleiteinrichtung so gestaltet, dass die Flügel der Ausleiteinrichtung den Transportpfad der Behältnisse nur zwischen diesen kreuzen und keine Berührung mit den Behältnissen stattfindet.

Soll ein Behältnis ausgeleitet werden, so kann die Geschwindigkeit der Ausleiteinrichtung erhöht oder vermindert werden, wobei ein weiterer Flügel auf das nachfolgende auszuleitende Behältnis trifft oder der vorherige Flügel auf dem Transportpfad verweilt und auf das auszuleitende Behältnis trifft und dieses aus der Klammer der Halteeinrichtung herausgedrückt wird.

Sollte das nächste Behältnis nicht ausgeleitet werden, so würde die Geschwindigkeit wieder gedrosselt werden, um zur synchronisierten Ausgangsbewegung zurückzukehren. Durch eine simple Variation der Geschwindigkeit wäre ein individuelles Ausleiten der Behältnisse sehr einfach möglich.

In einer weiteren vorteilhaften Ausführung der erfindungsgemäßen Vorrichtung ist die Ausleitrichtung an einer Tangentialen zur Transportrichtung angeordnet oder steht unter einem spitzen Winkel zur Transportrichtung, sodass eine Ausschleusung in radialer Richtung erfolgen kann.

In einer weiteren vorteilhaften Ausführung der erfindungsgemäßen Vorrichtung ist die Ausleiteinrichtung über eine Pleuelstange und einen damit verbundenen Rotationsmotor steuerbar. In einer solchen Ausführungsform wäre die Ausleiteinrichtung rotativ über die Schwenkachse gelagert, würde aber nicht über diese angetrieben werden. Stattdessen wäre die Ausleiteinrichtung über eine Pleuelstange mit einem beabstandeten Rotationsmotor verbunden und würde über diesen angesteuert werden. Als Rotationsmotor könnte bevorzugt ein Gleichstrommotor, Asynchronmotor oder Schrittmotor oder besonders bevorzugt einen Synchronmotor verwendet werden.

Durch einen Einsatz einer solchen Pleuelstange könnte ein erhöhter Krafteintrag auf die Behältnisse erhalten werden und das Ausleiten der Behältnisse, insbesondere bei größeren und/oder schwereren Behältnissen erleichtert werden.

In einer weiteren vorteilhaften Ausführung der erfindungsgemäßen Vorrichtung ist die Schwenkachse der Ausleiteinrichtung aseptisch gelagert. Denkbar wäre, dass das Transportieren und Ausleiten der Behältnisse unter sterilen, aseptischen Bedingungen in einem Reinraum erfolgen soll. Aus Gründen der Wirtschaftlichkeit wäre es von Vorteil, einen solchen Reinraum möglich klein zu halten und dass sich nur die Ausleiteinrichtung innerhalb des sterilen Raumes befindet und die zugehörige Antriebseinrichtung außerhalb des sterilen Raumes befinden würde. In diesem Fall müsste lediglich die Schwenkachse durch die Reinraumgrenzen geführt werden.

Eine erfindungsgemäße Ausleitvorrichtung, welche dazu geeignet und bestimmt ist, einzelne Behältnisse aus einem Transportpfad auszuleiten weist eine Ausleiteinrichtung, welche wenigstens einen Kontaktbereich aufweist, welcher die Behältnisse kontaktiert, um diese aus dem Transportpfad auszuleiten und eine Antriebseinrichtung zum Antreiben der Ausleiteinrichtung auf. Die Ausleiteinrichtung ist bezüglich einer vorgegebenen Schwenkachse schwenkbar und diese Schwenkachse ist im Wesentlichen parallel zu den Längsrichtungen der Behältnisse angeordnet.

Weitere Vorteile und Ausführungsformen ergeben sich aus den beigefügten Zeichnungen:
- Fig. 1a,b: Eine schematische Darstellung einer erfindungsgemäßen Vorrichtung zum Behandeln von Behältnissen und deren Transporteinrichtung;
- Fig. 2a-c: eine schematische Darstellung einer vorteilhaften Ausführungsform der erfindungsgemäßen Vorrichtung;
- Fig. 3a-c: eine schematische Darstellung einer vorteilhaften Ausführungsform der erfindungsgemäßen Vorrichtung;
- Fig. 4: eine schematische Darstellung einer vorteilhaften Ausführungsform einer erfindungsgemäßen Auslaufeinrichtung; und
- Fig. 5: eine schematische Darstellung einer vorteilhaften Ausführungsform der erfindungsgemäßen Vorrichtung.

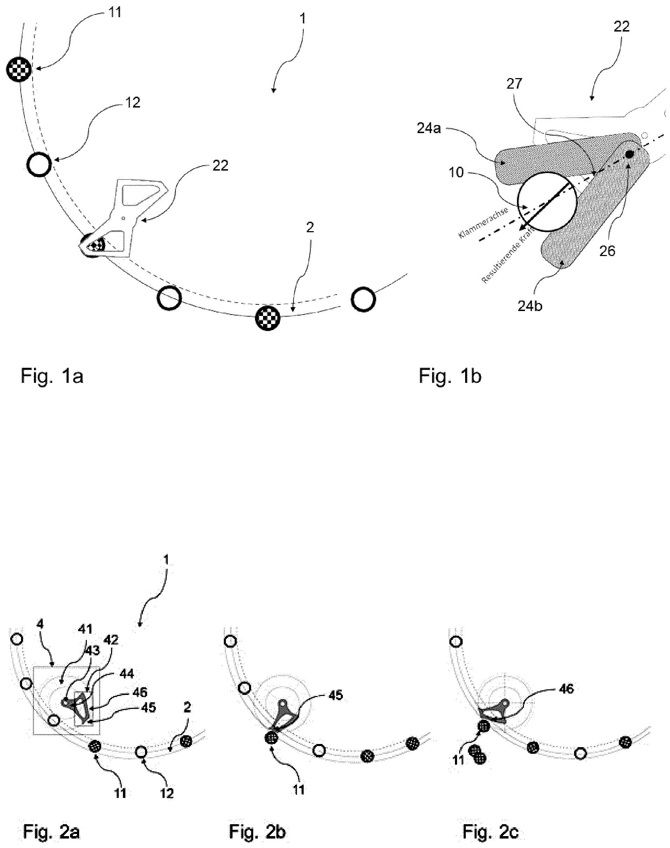

Fig. 1a,b zeigt eine schematische Darstellung einer erfindungsgemäßen Vorrichtung 1 zum Behandeln von Behältnissen 10 (auszuleitende Behältnisse 11, intakte Behältnisse 12). Dabei ist eine Transporteinrichtung 2 vorgesehen beispielsweise mit einem kreisförmigen bzw. kreissegmentförmigen Transportpfad und einer Vielzahl an Halteeinrichtungen 22. Ebenfalls gezeigt ist in Detailansicht die Halteeinrichtung 22, in der ein Behältnis 10 durch zwei Klammern 24a, b gehalten wird.

Die beiden Klammern 24a, b sind über bevorzugt eine gemeinsame Schwenkachse 26 miteinander verbunden und klemmen die Behältnisse 10 so ein, dass die Klammerachse 27 (gestrichelte Linie) radial nach außen zeigt. Trifft die Ausleiteinrichtung (nicht gezeigt) auf ein auszuleitendes Behältnis 11, so wirkt eine Kraft auf dieses, welche annähernd der Richtung der Klammerachse 27 entspricht (vgl. Zeichnung), wodurch das Behältnis 11 leicht aus der Klammer heraus gedrückt wird.

Fig. 2a-c zeigt eine schematische Darstellung einer vorteilhaften Ausführungsform der erfindungsgemäßen Vorrichtung 1 umfassend eine Transporteinrichtung 2 und eine Ausleitvorrichtung 4, wobei die Ausleiteinrichtung 41 einen Flügel 44 aufweist, welcher um die Schwenkachse 43 rotiert. Der Kontaktbereich 42 weist eine erste Geometrie 45 (hier Außenkontur) zum dynamischen Ausleiten und eine zweite Geometrie 46 (hier Außenkontur) zum statischen Ausleiten der Behältnisse auf. Die Unterabbildungen a bis c zeigen verschiedene Betriebszustände der Ausleitvorrichtung 4. Figur 2a zeigt die Ausleitvorrichtung 41 in einer ruhenden Parkposition. Figur 2b zeigt die Ausleiteinrichtung 41 in eingeschwenkter Position, wobei die erste Geometrie 45 des Kontaktbereichs 42 auf das auszuleitende Behältnis 11 trifft. Figur 2c zeigt die Ausleiteinrichtung 41 in verzögerter Position, wobei die zweite Geometrie 46 des Kontaktbereichs 42 auf das auszuleitende Behältnis trifft.

Zu Beginn befindet sich die Ausleiteinrichtung 41 in einer ruhenden Parkposition (Fig. 2a). Soll ein Behältnis 11 ausgeleitet werden, beschleunigt die Ausleiteinrichtung 41 (Initiation durch Steuersignal) und trifft mit der ersten Geometrie 45 auf das Behältnis 11 (Fig. 2b), wodurch dieses aus dem Transportpfad ausgeleitet wird. Soll das nächste Behältnis 12 nicht ausgeleitet werden, so kehrt die Ausleiteinrichtung 41 in die Parkposition zurück und kann bei Bedarf erneut aktiviert werden.

Soll das nächste Behältnis 11 stattdessen ebenfalls ausgeleitet werden, so kann die Ausleiteinrichtung 41 verzögern, bzw. gebremst werden, wodurch diese in dem Transportpfad verharrt und mit der zweiten Geometrie 46 des Kontaktbereichs 42 das Behältnis 11 berührt und aus dem Transportpfad ausleitet. Für den Fall, dass jedes zweite Behältnis 11 ausgeschleust werden soll, wäre es denkbar, dass die Ausleiteinrichtung 41 mit einer zur Bewegung der Behältnisse synchronisierten Geschwindigkeit rotiert, und die erste Geometrie 45 des Kontaktbereichs 42 auf jedes zweite Behältnis 11 trifft und dieses aus dem Transportpfad ausleitet.

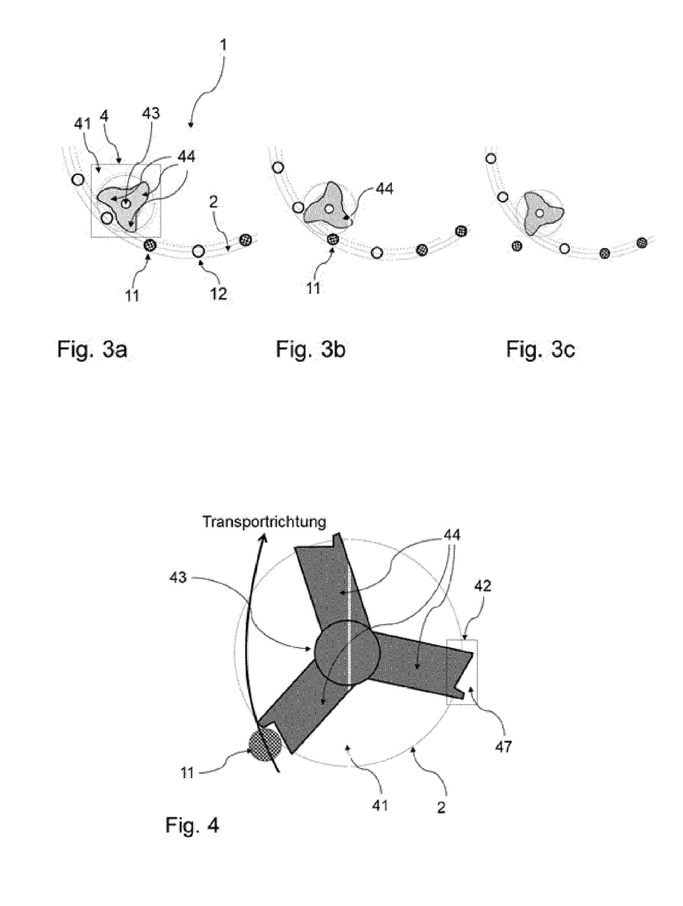

Fig. 3a-c zeigt eine schematische Darstellung einer weiteren vorteilhaften Ausführungsform der erfindungsgemäßen Vorrichtung 1 umfassend eine Transporteinrichtung 2 und eine Ausleitvorrichtung 4, wobei die Ausleiteinrichtung 41 drei Flügel 44 aufweist, welche um die Schwenkachse 43 rotieren. Die Unterabbildungen a bis c zeigen verschiedene Betriebszustände der Ausleitvorrichtung 4.

Figur 3a zeigt einen Zustand, in dem die Ausleiteinrichtung 41 und die Transporteinrichtung 2 synchronisiert sind und ein Flügel 44 im Wesentlichen mittig zwischen zwei Behältnissen 10 angeordnet ist. Figur 3b zeigt einen Zustand, in dem die Ausleiteinrichtung 41 beschleunigt wird und ein weiter Flügel 44 sich einem auszuleitenden Behältnis 11 annähert. Figur 3c zeigt einen Zustand, in dem der in Figur 3b sich nähernde Flügel 44 das Behältnis 11 bereits ausgeleitet hat.

In einem Betrieb, in dem keine Behältnisse 12 ausgeleitet werden sollen, rotiert die Ausleiteinrichtung 41 - bevorzugt mit einer zur Bewegung der Behältnisse synchronisierten Geschwindigkeit - in der Form, dass die Flügel den Transportpfad immer zwischen zwei Behältnissen kreuzt und die Behältnisse die Ausleiteinrichtung 41 im Bereich deren Ausnehmungen passieren (Fig. 3a). Soll ein Behältnis 11 ausgeleitet werde, so erhöht sich die Geschwindigkeit des Ausleiteinrichtung (als Antwort auf ein Steuersignal), wodurch ein Flügel 44 sich dem auszuleitenden Behältnis 11 nähert (Fig. 3b) und dieses aus dem Transportpfad heraus leitet (Fig. 3c). Alternativ kann die Geschwindigkeit der Ausleiteinrichtung gedrosselt werden, wodurch ein Flügel 44 länger auf dem Transportpfad verbleibt und ein einzuschleusendes Behältnis 11 auf dieses trifft und dadurch ausgeleitet wird.

Soll das nachfolge Behältnis 12 nicht ausgeleitet werden, so wird die Geschwindigkeit der Ausleiteinrichtung zunächst verringert (geringe Geschwindigkeit als im Anfangszustand) bzw. erhöht (höhere Geschwindigkeit als im Anfangszustand) und kurz darauf wieder auf die Anfangsgeschwindigkeit gebracht. Sollte stattdessen das nachfolgende Behältnis 11 ausgeleitet werden, so rotiert die Ausleiteinrichtung 41 mit der Anfangsgeschwindigkeit ohne ein zwischenzeitliches Abbremsen.

Fig. 4 zeigt eine schematische Darstellung einer weiteren vorteilhaften Ausführungsform der erfindungsgemäßen Vorrichtung 1 umfassend eine Transporteinrichtung 2 und eine Ausleiteinrichtung 41, welche drei Flügel 44 aufweist und eine aktiv unterstützende Geometrie 47 des Kontaktbereichs 42. Trifft ein auszuleitendes Behältnis 11 auf die aktiv unterstützende Geometrie 47 der Ausleiteinrichtung 41, so wirkt dadurch eine Kraft auf den Flügel 44.

Da dieser fest mit der Schwenkachse und der damit verbunden Antriebseinrichtung verbunden ist und dieser Aufbau insgesamt daher eine viel höhere Masse als das Behältnis aufweist (äquivalentes Modell wäre ein elastischer Stoß eines Balles gegen eine Hauswand), so wirkt netto eine Kraft auf das Behältnis genau entgegengesetzt. Da das Behältnis nur recht locker in den Klammern der Halteeinrichtung gehalten werden, wird es durch die wirkende Kraft aus diesen gelöst und aus dem Transportpfad ausgeleitet.

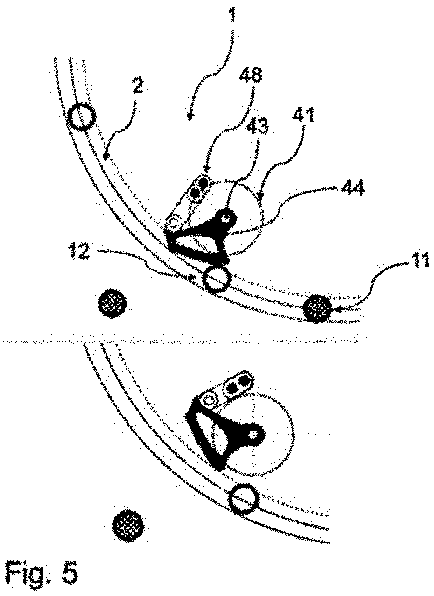

Fig. 5 zeigt eine schematische Darstellung einer vorteilhaften Ausführungsform der erfindungsgemäßen Vorrichtung 1 umfassend eine Transporteinrichtung 2 und eine Ausleitvorrichtung 4, wobei die Ausleiteinrichtung 41 einen Flügel 44 aufweist, welcher um die Schwenkachse 43 rotiert. Die Ausleiteinrichtung 41 ist mit einer Pleuelstange 48 verbunden und wird über diese gesteuert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 10: Behältnis
- 11: Auszuleitendes Behältnis
- 12: Intaktes Behältnis
- 2: Transporteinrichtung
- 22: Halteeinrichtung
- 24a,b: Klammer
- 26: Schwenkachse
- 27: Klammerachse
- 4: Ausleitvorrichtung
- 41: Ausleiteinrichtung
- 42: Kontaktbereich
- 43: Schwenkachse
- 44: Flügel
- 45: Erste Geometrie
- 46: Zweite Geometrie
- 47: Aktiv unterstützende Geometrie
- 48: Pleuelstange

## Patentansprüche

1. Vorrichtung (1) zum Behandeln von Behältnissen (10) mit einer Transporteinrichtung (2), welche die Behältnisse (10) entlang eines vorgegebenen Transportpfades transportiert, wobei die Transporteinrichtung (2) einen bewegbaren Träger aufweist, an dem eine Vielzahl von Halteeinrichtungen (22) zum Halten der Behältnisse (10) angeordnet sind, wobei die Behältnisse (10) jeweils Längsrichtungen (L) aufweisen, wobei die Längsrichtungen der von der Transporteinrichtung (2) transportierten Behältnisse (10) parallel zueinander ausgerichtet sind und die Behältnisse (10) äquidistant voneinander beabstandet sind, mit einer Ausleitvorrichtung (4), welche dazu geeignet und bestimmt ist, einzelne Behältnisse (10) aus dem Transportpfad auszuleiten, wobei die Ausleitvorrichtung (4) eine Ausleiteinrichtung (41) aufweist, welche wenigstens einen Kontaktbereich (42) aufweist, welcher die Behältnisse (10) kontaktiert, um diese aus dem Transportpfad auszuleiten,
**dadurch gekennzeichnet, dass**
die Ausleiteinrichtung (41) bezüglich einer vorgegebenen Schwenkachse (43) schwenkbar ist und diese Schwenkachse (43) im Wesentlichen parallel zu den Längsrichtungen der Behältnisse (10) angeordnet ist.

2. Vorrichtung (1) nach Anspruch 1,
**dadurch gekennzeichnet, dass**
die Vorrichtung (1) eine Antriebseinrichtung zum Antreiben der Ausleiteinrichtung (41) aufweist und diese Antriebseinrichtung einen Rotationsmotor, bevorzugt einen Gleichstrommotor, Asynchronmotor oder Schrittmotor oder besonders bevorzugt einen Synchronmotor und bevorzugt einen Drehgeber aufweist.

3. Vorrichtung (1) nach einem der Ansprüche 1 oder 2,
**dadurch gekennzeichnet, dass**
die Antriebseinrichtung der Ausleitvorrichtung (4) mit einer variablen Geschwindigkeit betreibbar ist, welche insbesondere in Abhängigkeit von Signalen steuerbar ist.

4. Vorrichtung (1) nach Anspruch 1,
**dadurch gekennzeichnet, dass**
die Ausleiteinrichtung (41) wenigstens einen Flügel (44) aufweist und/oder der Kontaktbereich (42) wenigstens zwei unterschiedliche Geometrien aufweist.

5. Vorrichtung (1) nach einem der Ansprüche 1 oder 4,
**dadurch gekennzeichnet, dass**
das Trägheitsmoment der Ausleiteinrichtung (41) kleiner als 5 kg/cm², bevorzugt kleiner als 3 kg/cm² und besonders bevorzugt kleiner als 2 kg/cm² ist.

6. Vorrichtung (1) nach einem der Ansprüche 1, 4 oder 5,
**dadurch gekennzeichnet, dass**
der Kontaktbereich (42) der Ausleiteinrichtung (41) eine Geometrie aufweist, welche das Ausleiten der Behältnisse (10) aktiv unterstützt.

7. Vorrichtung (1) nach einem der Ansprüche 1, 4 bis 6,
**dadurch gekennzeichnet, dass**
der Durchmesser der Ausleiteinrichtung (41) kleiner als 125 mm, besonders bevorzugt kleiner als 100 mm, größer als 50 mm und besonders bevorzugt größer als 75 mm ist.

8. Vorrichtung (1) nach einem der Ansprüche 1 oder 4 bis 7,
**dadurch gekennzeichnet, dass**
die Ausleiteinrichtung (41) Ausnehmungen und/oder Hohlstrukturen aufweist.

9. Vorrichtung (1) nach einem der Ansprüche 1 oder 4 bis 8,
**dadurch gekennzeichnet, dass**
die Ausleiteinrichtung (41) genau einen Flügel (44) aufweist und der Kontaktbereich (42) eine erste Geometrie (45) zum dynamischen Ausleiten von Behältnissen (10) und eine zweite Geometrie (46) zum statischen Ausleiten von Behältnissen (10) aufweist.

10. Vorrichtung (1) nach einem der Ansprüche 1 oder 4 bis 9,
**dadurch gekennzeichnet, dass**
die Ausleiteinrichtung (41) eine Parkposition aufweist.

11. Vorrichtung (1) nach einem der Ansprüche 1 oder 4 bis 8,
**dadurch gekennzeichnet, dass**
die Ausleiteinrichtung (41) genau drei Flügel (44) aufweist und/oder kontinuierlich bewegbar ist.

12. Vorrichtung (1) nach einem der Ansprüche 1 oder 4 bis 11,
**dadurch gekennzeichnet, dass**
die Ausleitrichtung an einer Tangentialen zur Transportrichtung angeordnet ist oder unter einem spitzen Winkel zur Transportrichtung steht.

13. Vorrichtung (1) nach einem der Ansprüche 1, 4 bis 8 oder 10 bis 12,
**dadurch gekennzeichnet, dass**
die Ausleiteinrichtung (41) über eine Pleuelstange (47) und einem damit verbundenen Rotationsmotor steuerbar ist.

14. Vorrichtung (1) nach einem der Ansprüche 1 oder 4 bis 13,
**dadurch gekennzeichnet, dass**
die Schwenkachse (43) der Ausleiteinrichtung (41) aseptisch gelagert ist.

## Claims

1. Apparatus (1) for treating containers (10) with a transport device (2) which transports the containers (10) along a predetermined transport path, wherein the transport device (2) has a movable carrier on which a plurality of holding devices (22) are arranged for holding the containers (10), wherein the containers (10) each have longitudinal directions (L), wherein the longitudinal directions of the containers (10) transported by the transport device (2) are aligned parallel to one another and the containers (10) are spaced equidistant from one another, with a discharge apparatus (4) which is suitable and intended to discharge individual containers (10) from the transport path, wherein the discharge apparatus (4) has a discharge device (41) which has at least one contact area (42) which contacts the containers (10) in order to discharge them from the transport path,
**characterized in that**
the discharge device (41) is pivotable about a predetermined pivot axis (43) and this pivot axis (43) is arranged substantially parallel to the longitudinal directions of the containers (10).

2. Apparatus (1) according to claim 1,
**characterized in that**
the apparatus (1) has a drive device for driving the discharge device (41), and this drive device has a rotary motor, preferably a direct current motor, asynchronous motor or stepper motor, or particularly preferably a synchronous motor, and preferably a rotary encoder.

3. Apparatus (1) according to one of claims 1 or 2,
**characterized in that**
the drive device of the discharge apparatus (4) can be operated at a variable speed, which can be controlled in particular in dependence of signals.

4. Apparatus (1) according to claim 1,
**characterized in that**
the discharge device (41) has at least one wing (44) and/or the contact area (42) has at least two different geometries.

5. Apparatus (1) according to one of claims 1 or 4,
**characterized in that**
the moment of inertia of the discharge device (41) is less than 5 kg/cm², preferably less than 3 kg/cm² and particularly preferably less than 2 kg/cm².

6. Apparatus (1) according to one of claims 1, 4 or 5,
**characterized in that**
the contact area (42) of the discharge device (41) has a geometry which actively supports the discharge of the containers (10).

7. Apparatus (1) according to any one of claims 1, 4 to 6,
**characterized in that**
the diameter of the discharge device (41) is less than 125 mm, particularly preferably less than 100 mm, greater than 50 mm and particularly preferably greater than 75 mm.

8. Apparatus (1) according to one of claims 1 or 4 to 7,
**characterized in that**
the discharge device (41) has recesses and/or hollow structures.

9. Apparatus (1) according to one of claims 1 or 4 to 8,
**characterized in that**
the discharge device (41) has exactly one wing (44) and the contact area (42) has a first geometry (45) for dynamically discharging containers (10) and a second geometry (46) for statically discharging containers (10).

10. Apparatus (1) according to one of claims 1 or 4 to 9,
**characterized in that**
the discharge device (41) has a parking position.

11. Apparatus (1) according to one of claims 1 or 4 to 8,
**characterized in that**
the discharge device (41) has exactly three wings (44) and/or is continuously movable.

12. Apparatus (1) according to one of claims 1 or 4 to 11,
**characterized in that**
the discharge direction is arranged tangentially to the transport direction or at an acute angle to the transport direction.

13. Apparatus (1) according to one of claims 1, 4 to 8 or 10 to 12,
**characterized in that**
the discharge device (41) can be controlled via a connecting rod (47) and a rotary motor connected thereto.

14. Apparatus (1) according to one of claims 1 or 4 to 13,
**characterized in that**
the pivot axis (43) of the discharge device (41) is mounted aseptically.

## Revendications

1. Dispositif (1) de traitement de récipients (10) avec un système de transport (2), qui transporte les récipients (10) le long d'une voie de transport prédéfinie, dans lequel le système de transport (2) présente un support mobile sur lequel sont disposés une pluralité de systèmes de maintien (22) pour maintenir les récipients (10), dans lequel les récipients (10) présentent respectivement des directions longitudinales (L), dans lequel les directions longitudinales des récipients (10) transportés par le système de transport (2) sont alignées parallèlement les unes par rapport aux autres et les récipients (10) sont espacés les uns des autres de manière équidistante, avec un dispositif d'évacuation (4) qui est adapté pour et se destine à évacuer des récipients (10) individuels de la voie de transport, dans lequel le dispositif d'évacuation (4) présente un système d'évacuation (41) qui présente au moins une zone de contact (42) qui vient en contact avec les récipients (10) pour les évacuer de la voie de transport,
**caractérisé en ce que**
le système d'évacuation (41) peut pivoter par rapport à un axe de pivotement (43) prédéfini et cet axe de pivotement (43) est disposé sensiblement parallèlement aux directions longitudinales des récipients (10).

2. Dispositif (1) selon la revendication 1,
**caractérisé en ce que**
le dispositif (1) présente un système d'entraînement pour entraîner le système d'évacuation (41) et ledit système d'entraînement présente un moteur rotatif, de manière préférée un moteur à courant continu, un moteur asynchrone ou un moteur pas à pas ou, de manière particulièrement préférée, un moteur synchrone et de manière préférée un encodeur.

3. Dispositif (1) selon l'une quelconque des revendications 1 ou 2,
**caractérisé en ce que**
le système d'entraînement du dispositif d'éjection (4) peut fonctionner à une vitesse variable, qui peut être commandée en particulier en fonction de signaux.

4. Dispositif (1) selon la revendication 1,
**caractérisé en ce que**
le système d'évacuation (41) présente au moins une aile (44) et/ou la zone de contact (42) présente au moins deux géométries différentes.

5. Dispositif (1) selon l'une quelconque des revendications 1 ou 4,
**caractérisé en ce que**
le couple d'inertie du système d'évacuation (41) est inférieur à 5 kg/cm², de manière préférée inférieur à 3 kg/cm² et de manière particulièrement préférée inférieur à 2 kg/cm².

6. Dispositif (1) selon l'une quelconque des revendications 1, 4 ou 5,
**caractérisé en ce que**
la zone de contact (42) du système d'évacuation (41) présente une géométrie qui soutient activement l'évacuation des récipients (10).

7. Dispositif (1) selon l'une quelconque des revendications 1, 4 à 6,
**caractérisé en ce que**
le diamètre du système d'évacuation (41) est inférieur à 125 mm, de manière particulièrement préférée inférieur à 100 mm, supérieur à 50 mm et de manière particulièrement préférée supérieur à 75 mm.

8. Dispositif (1) selon l'une quelconque des revendications 1 ou 4 à 7,
**caractérisé en ce que**
le système d'évacuation (41) présente des évidements et/ou des structures creuses.

9. Dispositif (1) selon l'une quelconque des revendications 1 ou 4 à 8,
**caractérisé en ce que**
le système d'évacuation (41) présente exactement une aile (44) et la zone de contact (42) présente une première géométrie (45) pour l'évacuation dynamique de récipients (10) et une deuxième géométrie (46) pour l'évacuation statique de récipients (10).

10. Dispositif (1) selon l'une quelconque des revendications 1 ou 4 à 9,
**caractérisé en ce que**
le système d'évacuation (41) présente une position de stationnement.

11. Dispositif (1) selon l'une quelconque des revendications 1 ou 4 à 8,
**caractérisé en ce que**
le système d'évacuation (41) présente exactement trois ailes (44) et/ou est mobile en continu.

12. Dispositif (1) selon l'une quelconque des revendications 1 ou 4 à 11,
**caractérisé en ce que**
la direction d'évacuation est disposée sur une tangente à la direction de transport ou se trouve selon un angle aigu par rapport à la direction de transport.

13. Dispositif (1) selon l'une quelconque des revendications 1, 4 à 8 ou 10 à 12,
**caractérisé en ce que**
le système d'évacuation (41) peut être commandé par une bielle (47) et un moteur de rotation relié à celle-ci.

14. Dispositif (1) selon l'une quelconque des revendications 1 ou 4 à 13,
**caractérisé en ce que**
l'axe de pivotement (43) du système d'évacuation (41) est monté de manière aseptique.
